(19) Europäisches Patentamt
European Patent Office
Office européen des brevets

(11) EP 4 168 523 B1

(12) EUROPEAN PATENT SPECIFICATION

(45) Date of publication and mention of the grant of the patent:
**03.07.2024 Bulletin 2024/27**

(21) Application number: **21730936.8**

(22) Date of filing: **08.06.2021**

(51) International Patent Classification (IPC):
***C11D 3/386*** *(2006.01)* ***C11D 3/37*** *(2006.01)*
***C11D 17/00*** *(2006.01)*

(52) Cooperative Patent Classification (CPC):
**C11D 3/3707; C11D 3/3719; C11D 3/3788; C11D 3/38618; C11D 3/38627; C11D 17/0013**

(86) International application number:
**PCT/EP2021/065256**

(87) International publication number:
**WO 2021/254824 (23.12.2021 Gazette 2021/51)**

# (54) COMPOSITIONS AND THEIR USE

ZUSAMMENSETZUNGEN UND DEREN VERWENDUNG

COMPOSITIONS ET LEUR UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.06.2020 EP 20180698**

(43) Date of publication of application:
**26.04.2023 Bulletin 2023/17**

(73) Proprietor: **BASF SE**
**67056 Ludwigshafen am Rhein (DE)**

(72) Inventors:
- **GARCIA MARCOS, Alejandra**
  **67056 Ludwigshafen (DE)**
- **HUEFFER, Stephan**
  **67056 Ludwigshafen (DE)**
- **GARCIA CASTRO, Ivette**
  **67056 Ludwigshafen (DE)**
- **KOENIG, Sandra, Gloria**
  **67056 Ludwigshafen (DE)**

(74) Representative: **BASF IP Association**
**BASF SE**
**GBI-C006**
**67056 Ludwigshafen (DE)**

(56) References cited:
**EP-A1- 0 376 705**
**WO-A1-2019/233795**
**WO-A1-2020/069915**
**US-A1- 2009 176 682**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 168 523 B1

## Description

The present invention is directed to detergent compositions comprising

(A) at least one polymer comprising

(a) a core obtained by

reacting a diamine $H_2N$-Z-$NH_2$ with a polycarboxylic compound PC having a total number TN of carboxyl groups per molecule in the range of from 3 to 10,

wherein Z is selected from $C_3$-$C_{12}$-cycloalkylene that may be non-substituted or substituted with one or more O-$C_1$-$C_4$-alkyl groups and wherein $C_3$-$C_{12}$-cycloalkylene may bear one to three methyl groups,

and wherein carboxyl groups are selected from COOH and $COOX^1$ with $X^1$ being selected from $C_1$-$C_4$-alkyl, or two carboxyl groups together form an anhydride group,

(b) and subsequent reaction with at least one $C_2$-$C_4$-alkylene oxide,

(B) at least one hydrolase.

Various detergent compositions such as, but not limited to laundry detergents have to fulfil several requirements. They need to remove all sorts of soiling from laundry, for example all sorts of pigments, clay, fatty soil, and dyestuffs including dyestuff from food and drinks such as red wine, tea, coffee, and fruit including berry juices. Laundry detergents also need to exhibit a certain storage stability. Especially laundry detergents that are liquid or that contain hygroscopic ingredients often lack a good storage stability, e.g. enzymes tend to be deactivated.

Fatty soils are still a challenge in laundering. Although numerous suggestions for removal have been made - polymers, enzymes, surfactants - solutions that work well are still of interest. It has been suggested to use a lipase to support fat removal but many builders - especially in liquid laundry detergents - do not work well with lipase.

In WO 2020/069915, certain enzyme concentrates are disclosed.

It was therefore an objective to provide a detergent composition that fulfils the requirements discussed above. It was further an objective to provide ingredients that fulfil the above requirements, and it was an objective to provide a process to make such ingredients and detergent compositions.

It was now found that compositions containing polymers disclosed in WO 2019/233795 have excellent fat removal properties when used in laundry detergents or automatic dishwashing compositions together with a hydrolase.

Accordingly, the detergent compositions defined at the outset have been found, hereinafter also referred to as inventive compositions or compositions according to the present invention. The inventive compositions will be described in more detail below.

Inventive compositions comprise

(A) a polymer, hereinafter also briefly referred to as "polymer (A)" or simply (A), wherein said polymer (A) comprises

(a) a core, hereinafter also briefly referred to as core (a) or simply as (a), wherein core (a) is obtained by

reacting a diamine $H_2N$-Z-$NH_2$ with a polycarboxylic compound PC, hereinafter also in brief referred to as PC, wherein PC has a total number TN of carboxyl groups per molecule in the range of from 3 to 10,

wherein Z is selected from $C_3$-$C_{12}$-cycloalkylene that may be non-substituted or substituted with one or more O-$C_1$-$C_4$-alkyl groups and wherein $C_3$-$C_{12}$-cycloalkylene may bear one to three methyl groups,

and wherein carboxyl groups are selected from COOH and $COOX^1$ with $X^1$ being selected from $C_1$-$C_4$-alkyl, or two carboxyl groups together form an anhydride group,

(b) and subsequent reaction with at least one $C_2$-$C_4$-alkylene oxide,

(B) at least one lipase, hereinafter also referred to as "lipase (B)".

For the synthesis of core (a), PC, which has a total number TN of carboxylic groups per molecule of 3 to 10,

preferably 3 or 4, is reacted with a diamine of the formula

$H_2N-Z-NH_2$

wherein Z represents organic group with 2 to 20 carbon atoms, preferably with 3 to 10 carbon atoms.

Preferably, Z is a hydrocarbon that does not comprise atoms other than hydrogen and carbon; more preferably, Z is an aliphatic or cycloaliphatic hydrocarbon.

More preferably, Z is a cycloaliphatic hydrocarbon group, thus, it comprises a cycloaliphatic ring system. In one embodiment, Z is selected from cyclohexylene and cyclopentylene, each non-substituted or substituted with one to 2 methyl or methoxy groups

Even more preferably, said cycloaliphatic ring system is a cyclohexyl ring which may be substituted by one to three, notably one or two alkyl groups. The alkyl groups may be $C_1$-$C_6$-alkyl groups, preferably the alkyl groups are methyl or ethyl.

In a most preferred embodiment, the diamine of formula $H_2N-Z-NH_2$ is 1-methyl-2,4-diamine-cyclohexane, 1-methyl-2,6-diamine-cyclohexane or mixtures thereof. Mixtures of 1-methyl-2,4-diamine-cyclohexane and 1-methyl-2,6-diamine-cyclohexane are available from the corresponding mixtures of 2,6- and 2,4- diamino toluene by hydrogenation.

In one embodiment of the present invention, Z is selected from combinations of

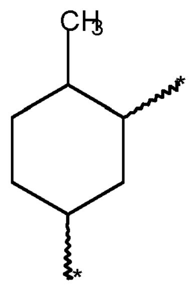

and

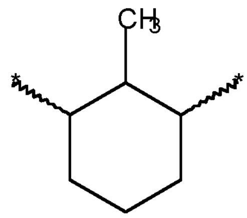

Diamine and PC are preferably reacted in a molar ratio of diamine to PC in the range of from 0.3 TN to 1 TN, preferably from 0.3 TN to 0.98 TN.

The carboxylic groups are preferably selected from COOH and $COOX^1$ with $X^1$ being selected from $C_1$-$C_4$-alkyl, or two carboxyl groups together forming an anhydride group.

More preferably, the carboxylic groups are carboxylic ester groups, notably carboxylic alkyl ester groups of formula -C(=O)-O-Y with Y being an alkyl group, preferably an alkyl group with 1 to 10 carbon atoms, more preferably with 1 to 4 carbon atoms.

In a preferred embodiment, PC comprises 3 or 4 carboxylic groups per molecule. In a more preferred embodiment, PC comprises 3 carboxylic groups per molecule.

Preferably, PC has a molecular weight below 2000 g/mol, particularly below 1000 g/mol and more preferably below 500 g/mol. A minimum molecular weight is 148 g/mol.

Examples of PC are citric acid, isocitric acid, aconitic acid, propane-1 ,2,3 tricarboxylic acid, trimesic acid, trimellytic acid, trimellytic anhydride, cyclobutane and cyclopentane-1,2,3,4-tetracarboxylic acid, and of benzene-1,2,4,5-tetracarboxylic acids, benzophenone-3,3',4,4'-tetracarboxylic dianhydride and their anhydrides, and ethylendiamine tetraacetic acid (EDTA) and their respective tri- and tetramethyl and tri- and tetraethyl esters.

Further examples of PC are polycarboxylic acids and anhydrides, as, for example, 1,2,3-benzenetricarboxylic acid and 1,2,3-benzenetricarboxylic dianhydride, 1,3,5-benzenetricarboxylic acid (trimesic acid), preferably 1,2,4-benzenetricarboxylic acid (trimellitic acid), trimellitic anhydride and, in particular, 1 ,2,4,5-benzenetetracarboxylic acid (pyromellitic acid) and 1,2,4,5-benzenetetracarboxylic dianhydride (pyromellitic dianhydride), 3,3',4,4"-benzophenonetetracarboxylic acid, 3,3',4,4"-benzophenonetetracarboxylic dianhydride, in addition benzenehexacarboxylic acid (mellitic acid) and anhydrides of mellitic acid and their respective tri- and tetramethyl and tri- and tetraethyl esters.

Other suitable examples of PC including their anhydrides are mellophanic acid and mellophanic anhydride, 1,2,3,4-benzenetetracarboxylic acid and 1,2,3,4-benzenetetracarboxylic dianhydride, 3,3,4,4-biphenyltetracarboxylic acid and 3,3,4,4-biphenyltetracarboxylic dianhydride, 2,2,3,3-biphenyltetracarboxylic acid and 2,2,3,3-biphenyltetracarboxylic dianhydride, 1,4,5,8-naphthalenetetracarboxylic acid and 1,4,5,8-naphthalenetetracarboxylic dianhydride, 1,2,4,5-naphthalenetetracarboxylic acid and 1,2,4,5-naphthalenetetracarboxylic dianhydride, 2,3,6,7-naphthalenetetracarboxylic acid and 2,3,6,7-naphthalenetetracarboxylic dianhydride, 1,4,5,8-decahydronaphthalenetetracarboxylic acid and 1,4,5,8-decahydronaphthalenetetracarboxylic dianhydride, 4,8-dimethyl-1,2,3,5,6,7-hexahydronaphthalene-1,2,5,6-tetracarboxylic acid and 4,8-dimethyl-1,2,3,5,6,7-hexahydronaphthalene-1,2,5,6-tetracarboxylic dianhydride,

2,6-dichloronaphthalene-1,4,5,8-tetracarboxylic acid and 2,6-dichloronaphthalene-1,4,5,8-tetracarboxylic dianhydride, 2,7-dichloronaphthalene-1,4,5,8-tetracarboxylic acid and 2,7-dichloronaphthalene-1,4,5,8-tetracarboxylic dianhydride, 2,3,6,7-tetrachloronaphthalene-1,4,5,8-tetracarboxylic acid and 2,3,6,7-tetrachloronaphthalene-1 ,4,5,8-tetracarboxylic dianhydride, 1,3,9,10-phenanthrenetetracarboxylic acid and 1,3,9,10-phenanthrenetetracarboxylic dianhydride, 3,4,9,10-perylenetetracarboxylic acid and 3,4,9,10-perylenetetracarboxylic dianhydride, bis(2,3-dicarboxyphenyl)methane and bis(2,3-dicarboxyphenyl)methane dianhydride, bis(3,4-dicarboxyphenyl)methane and bis(3,4-dicarboxyphenyl)methane dianhydride, 1,1-bis(2,3-dicarboxyphenyl)ethane and 1,1-bis(2,3-dicarboxyphenyl)ethane dianhydride, 1,1-bis(3,4-dicarboxyphenyl)ethane and 1,1-bis(3,4-dicarboxyphenyl)ethane dianhydride, 2,2-bis(2,3-dicarboxyphenyl)propane and 2,2-bis(2,3-dicarboxyphenyl)propane dianhydride, 2,3-bis(3,4-dicarboxyphenyl)propane and 2,3-bis(3,4-dicarboxyphenyl)propane dianhydride, bis(3,4-carboxyphenyl)sulfone and bis(3,4-carboxyphenyl)sulfone dianhydride, bis(3,4-carboxyphenyl) ether and bis(3,4-carboxyphenyl) ether dianhydride, ethylenetetracarboxylic acid and ethylenetetracarboxylic dianhydride, 1,2,3,4-butanetetracarboxylic acid and 1,2,3,4-butanetetracarboxylic dianhydride, 1,2,3,4-cyclopentanetetracarboxylic acid and 1,2,3,4,-cyclopentanetetracarboxylic dianhydride, 2,3,4,5-pyrrolidinetetracarboxylic acid and 2,3,4,5-pyrrolidinetetracarboxylic dianhydride, 2,3,5,6-pyrazinetetracarboxylic acid and 2,3,5,6-pyrazinetetracarboxylic dianhydride, 2,3,4,5-thiophenetetracarboxylic acid and 2,3,4,5-thiophenetetracarboxylic dianhydride.

Further examples of PC are esters which correspond to the esters of the above mentioned polycarboxylic acids and anhydrides. Preferably, the carboxylic ester groups of such polycarboxylic acid esters are alkyl ester groups wherein the alkyl is an alkyl with 1 to 10 carbon atoms, more preferably with 1 to 4 carbon atoms.

Preferred PC are compounds according to formula (I)

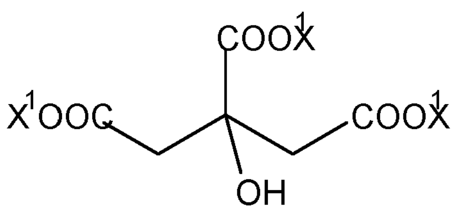

(I)

wherein all $X^1$ are different or the same and selected from methyl and ethyl, thus, PC is selected from citric acid as free acid or as ester wherein all carboxyl groups are esterified with methanol or ethanol.

PC is reacted with the diamine $H_2N\text{-}Z\text{-}NH_2$.

Diamine and PC are reacted to form a compound bearing amido groups and amino groups, known as amidoamine or polyamidoamine or - in the context of the present invention - core (a).

Preferably, 0.3 TN to TN mol of diamine are reacted with PC. TN is the number of carboxyl groups of the PC.

For example, in case of a PC with TN = 3, the molar amount of diamine is from 0.9 (resulting from 0.3 x TN = 0.9) to 3 (corresponding to TN).

Reacting a PC having 3 carboxylic groups with 3 mols of diamine may result in a defined polyamidoamine bearing 3 amido groups and 3 amino groups per molecule and being formed from exactly one mol of PC and 3 mols of diamine. However, it is preferred that a mixture of compounds results from reacting PC with diamine. Using less than 3 mols of a diamine usually results in a polyamidoamine with a higher molecular weight as more amino groups of diamine are reacted to form amido groups and thus connecting several molecules of PC.

Preferably, PC and the diamine are reacted in a ratio of 0.3 TN to 0.98 TN mols of diamine per 1 mol of PC.

More preferably, PC and the diamine are reacted in a ratio of 0.3 TN to 0.86 TN mols of diamine per 1 mol of PC.

Most preferably, PC and diamine are reacted in a ratio of 0.3 TN to 0.8 TN mols of the diamine per 1 mol of PC.

The reaction of diamine and PC may be performed with or without the use of a solvent. The reaction is preferably performed without solvent in embodiments wherein PC and diamine are liquid at 21°C, 1 bar.

In the reaction to form core (a), a catalyst may be used. However, due to the reactivity of the primary amino groups and carboxyl groups, a catalyst is usually not required, especially when anhydrides or $C_1$-$C_4$-alkyl esters are employed as PC. Catalysts that might be used are, for example sodium hypophosphite or any other amidation catalysts known in the art.

The reaction to form core (a)may be performed at normal pressure (1 bar). A reduced pressure may be helpful to withdraw low boiling compounds such as water (in case of reacting a PC with carboxylic acid groups) or alcohol such as ethanol (in case of reacting a PC with $C_1$-$C_4$-alkyl ester groups).

The formation of core (a) may be performed at elevated temperatures. Preferably, the reaction is performed at a temperature of 50 to 150°C, specifically of 80 to 120°C.

Preferably, the reaction is performed under exclusion of oxygen. The reaction may be performed, for example, under nitrogen.

The core (a) obtained from the process described above may be liquid or solid at 21°C, 1 bar.

No specific work-up is necessary if no solvent has been used. Otherwise the solvent may be removed during or after the reaction. If a catalyst was used it may be deactivated or otherwise removed.

The core (a) has preferably an amine number of 100 to 1500 mg KOH/g of core (a).

More preferably, core (a) has an amine number of 100 to 800 mg KOH/g of core (a).

The amine number does not include the amido groups of core (a). Hence, the amine number corresponds to the number of amino groups of core (a) which may be alkoxylated.

The amino number is preferably determined by titration as described in WO 2016/062578 according to the formula given on page 13:

Calculation:

$$Amine\ number = \frac{(V_P - V_B) \cdot t \cdot c \cdot 56.1}{E} = \frac{(V_P - V_B) \cdot t}{E} \cdot 5.61$$

with

Amine number = Fraction of total amine, calculated as mg KOH/g
VP = Consumption of standard solution up to the inflection point [ml]
VB = Consumption of standard solution in blank value titration [ml]
t = titer of the standard solution
c = concentration of the standard solution [= 0.1 mol/l]
56.1 = molar weight of KOH [g/mol]
E = weight of sample taken [g].

Subsequently, core (a) is reacted with at least one $C_2$-$C_4$-alkylene oxide. Examples of $C_2$-$C_4$-alkylene oxides are ethylene oxide ("EO"), propylene oxide ("PO"), butylene oxide ("BuO"), and mixtures of at least two of the foregoing, for example ethylene oxide and propylene oxide or ethylene oxide and butylene oxide. Preferred are propylene oxide and ethylene oxide, more preferred is ethylene oxide. Said reaction is hereinafter also referred to as "alkoxylation step" or simply as "alkoxylation".

In one embodiment of the present invention, the weight ratio of core (a) to polyalkylene oxide chains (b) in polymer (a) is in the range of from 1 to 100 up to 1 to 4, preferred are 1 to 50 up to 1 to 9.

Said alkoxylation is preferably carried out in the presence of a catalyst, for example a base or a double-metal cyanide.

In one embodiment, the alkoxylation is carried out in the presence of a base. Suitable bases such as potassium hydroxide, sodium hydroxide, sodium or potassium alkoxides such as potassium methylate ($KOCH_3$), potassium tert-butoxide, sodium ethoxide and sodium methylate ($NaOCH_3$), preferably from potassium hydroxide and sodium hydroxide. Further examples of catalysts are alkali metal hydrides and alkaline earth metal hydrides such as sodium hydride and calcium hydride, and alkali metal carbonates such as sodium carbonate and potassium carbonate. Preference is given to the alkali metal hydroxides, preference being given to potassium hydroxide and sodium hydroxide, and to alkali metal alkoxides, particular preference being given to potassium t-butoxide in t-butanol, sodium n-hexanolate in n-hexanol, and to sodium methanolate in n-nonanol. Typical use amounts for the base are from 0.05 to 10% by weight, in particular from 0.5 to 2% by weight, based on the total amount of condensate from step (β) and $C_2$-$C_4$-alkylene oxide.

In one embodiment, the alkoxylation is carried out in the presence of a double-metal cyanide. Double-metal cyanides, hereinafter also referred to as double metal cyanide compounds or DMC compounds, usually comprise at least two different metals, at least one of them being selected from transition metals and the other one being selected from transition metals and alkali earth metals, and furthermore cyanide counterions. Particularly suitable catalysts for the alkoxylation are double-metal cyanide compounds which contain zinc, cobalt or iron or two thereof. Berlin blue, for example, is particularly suitable.

Preference is given to using crystalline DMC compounds. In a preferred embodiment, a crystalline DMC compound of the Zn-Co type which comprises zinc acetate as further metal salt component is used as catalyst. Such compounds crystallize in monoclinic structure and have a platelet-like habit.

In one embodiment, the alkoxylation is carried out in the presence of at least one double-metal cyanide selected from hexacyano cobaltates.

In one embodiment, the alkoxylation is carried out in the presence of at least one double-metal cyanide selected from compounds according to general formula (X)

$$M^1_{r1}[M^2(CN)_{r2}(A)_{r3}]_{r4}\cdot r^6\ M^1_{r7}X^2_{m1}\cdot r^8(H_2O)\cdot r^5L\cdot kP \qquad (X),$$

wherein

$M^1$ is at least one metal ion chosen from the group consisting of $Zn^{2+}$, $Fe^{2+}$, $Fe^{3+}$, $Co^{3+}$, $Ni^{2+}$, $Mn^{2+}$, $Co^{2+}$, $Sn^{2+}$, $Pb^{2+}$, $Mo^{4+}$, $Mo^{6+}$, $Al^{3+}$, $V^{4+}$, $V^{5+}$, $Sr^{2+}$, $W^{4+}$, $W^{6+}$, $Cr^{2+}$, $Cr^{3+}$, $Cd^{2+}$, $Hg^{2+}$, $Pd^{2+}$, $Pt^{2+}$, $V^{2+}$, $Mg^{2+}$, $Ca^{2+}$, $Ba^{2+}$, $Cu^{2+}$, $La^{3+}$, $Ce^{3+}$, $Ce^{4+}$, $Eu^{3+}$, $Ti^{3+}$, $Ti^{4+}$, $Ag^{+}$, $Rh^{2+}$, $Rh^{3+}$, $Ru^{2+}$, $Ru^{3+}$,

$M^2$ is at least one metal ion chosen from the group consisting of $Fe^{2+}$, $Fe^{3+}$, $Co^{2+}$, $Co^{3+}$, $Mn^{2+}$, $Mn^{3+}$, $V^{4+}$, $V^{5+}$, $Cr^{2+}$, $Cr^{3+}$, $Rh^{3+}$, $Ru^{2+}$, $Ir^{3+}$,

and in a way that $M^1$ and $M^2$ are not identical,

A and $X^2$, independently of one another, are anions selected from the group consisting of halide, hydroxide, sulfate, carbonate, cyanide, thiocyanate, isocyanate, cyanate, carboxylate, oxalate, nitrate, nitrosyl, hydrogensulfate, phosphate, dihydrogenphosphate, hydrogenphosphate or hydrogencarbonate,

L is a ligand chosen from the group consisting of alcohols, aldehydes, ketones, ethers, polyethers, esters, polyesters, polycarbonate, ureas, amides, primary, secondary and tertiary amines, ligands with pyridine nitrogen, nitriles, sulfides, phosphides, phosphites, phosphanes, phosphonates and phosphates,

k is greater than or equal to zero, and up to 6. The variable k can be a whole number or a fraction.

P is an organic additive, selected for example from polyethers, polyesters, polycarbonates, polyalkylene glycol sorbitan esters, polyalkylene glycol glycidyl ethers, polyacrylamides, poly(acrylamide-co-acrylic acid), polyacrylic acids, poly(acrylamide-co-maleic acid), polyacrylonitriles, polyalkyl acrylates, polyalkyl methacrylates, polyvinyl methyl ethers, polyvinyl ethyl ethers, polyvinyl acetates, polyvinyl alcohol, poly-N-vinylpyrrolidone, poly(N-vinylpyrrolidone-co-acrylic acid), polyvinyl methyl ketone, poly(4-vinylphenol), poly(acrylic acid-co-styrene), oxazoline polymer, maleic acid and maleic anhydride copolymers, hydroxyethylcellulose, polyacetates, ionic surface-active and interface-active compounds, bile acid or salts thereof, esters or amides, carboxylic esters of polyhydric alcohols and glycosides.

r1, $r^2$, $r^3$, $r^4$, r7 and m1 are chosen such that the electroneutrality of the compound (X) is ensured, where each f and $r^3$ may be 0,

$r^5$ is the number of ligand molecules, for example a fraction or an integer greater than zero, or zero,

$r^5$ and $r^6$, independently of one another, are fractions or integers greater than zero, or zero.

In one embodiment, the upper limits of $r^5$, $r^6$, and $r^8$ are each 6.

Double-metal cyanide compounds can be used as powder, paste or suspension or be moulded to give a moulding, be introduced into mouldings, foams or the like or be applied to mouldings, foams or the like.

Preferably, the DMC catalyst used for alkoxylation is from 5 to 2000 ppm, i.e. mg of catalyst per kg of core (a), preferably less than 1000 ppm, in particular less than 500 ppm, particularly preferably less than 100 ppm, for example less than 50 ppm or 35 ppm, particularly preferably less than 25 ppm; ppm referring to mass-ppm (parts per million) of core (A).

Said alkoxylation may be carried out in bulk, embodiment (i), or in an organic solvent, embodiment (ii). In embodiment (i), water or alcohol can be removed from the core (a). Such water removal can be done by heating to a temperature in the range of from 80 to 150°C under a reduced pressure in the range of from 0.01 to 0.5 bar and distilling off the water.

In one embodiment, the alkoxylation is carried out at a reaction temperature in the range of from 70 to 200°C and preferably from 100 to 180°C.

The alkoxylation may be carried out in one or more steps, for example in two or three. Such steps are also referred to as "sub-steps".

In one embodiment, the alkoxylation is carried out in two sub-steps or three sub-steps. In the first sub-step, core (a) is reacted with one mole of ethylene oxide or propylene oxide, referring to the sum of primary and secondary amino groups of core (a) and neglecting the amido groups. In the second sub-step, the reaction product from the first sub-step is reacted with one or more $C_2$-$C_4$-alkylene oxides, for example in a molar ratio of 1 to 100 moles, referring to

amino groups of core (a), preferred are 5 to 80 mole and even more preferred are 6 to 60 moles. It is preferred to react core (a) with ethylene oxide or with propylene oxide or with combinations from ethylene oxide and propylene oxide.

From the above reaction sequence, polymer (A) is obtained. Polymer (A) may be used without work-up. However, it is preferred to deactivate a catalyst, if present, and to remove volatiles, for example non-reacted $C_2$-$C_4$-alkylene oxides, e.g. by vacuum treatment.

In one embodiment of the present invention, polymer (A) has an average molecular weight $M_w$ in the range of from 1,500 to 80,000 g/mol, preferably 5,000 to 50,000 g/mol. The average molecular weight may be determined, e.g., by gel permeation chromatography (GPC) in tetrahydrofuran (THF) as mobile phase, with linear polymethyl methacrylate ("PMMA") as standard.

In one embodiment of the present invention, polymer (A) has a molecular weight distribution $M_w/M_n$ in the range of from 1.1 to 2.5.

In one embodiment of the present invention, polymer (A) has a Hazen colour number in the range of from 20 to 500, determined in a 10 % weight aqueous solution.

In one embodiment of the present invention, polymer (A) has an OH value, measured according to DIN 53240 (2013), in the range of from 20 to 650, preferably 30 to 100 mg KOH/g polymer (A).

In one embodiment of the present invention, polymer (A) has a total amine value in the range of from 10 to 650, preferably 10 to 510 and more preferably 10 to 80 mg KOH/g polymer (A), determined according to ASTM D2074-07.

In one embodiment of the present invention, laundry detergent compositions according to the present invention may contain in the range of from 0.1 to 20 % by weight of polymer (A). Percentages refer to the total solids content of the respective laundry detergent composition.

In one embodiment of the present invention, detergent compositions for hard surface cleaners according to the present invention may contain in the range of from 0.1 to 20 % by weight of polymer (A), preferably 0.5 to 15 % by weight and even more preferably 1.0 to 5 % by weight. Percentages refer to the total solids content of the respective detergent composition.

The total solids content is in each case determined by removing the volatiles at 80°C in vacuum.

Inventive compositions further comprise at least one enzyme. Enzymes are identified by polypeptide sequences (also called amino acid sequences herein). The polypeptide sequence specifies the three-dimensional structure including the "active site" of an enzyme which in turn determines the catalytic activity of the same. Polypeptide sequences may be identified by a SEQ ID NO. According to the World Intellectual Property Office (WIPO) Standard ST.25 (1998) the amino acids herein are represented using three-letter code with the first letter as a capital or the corresponding one letter.

Any enzyme according to the invention relates to parent enzymes and/or variant enzymes, both having enzymatic activity. Enzymes having enzymatic activity are enzymatically active or exert enzymatic conversion, meaning that enzymes act on substrates and convert these into products. The term "enzyme" herein excludes inactive variants of an enzyme.

A "parent" sequence (of a parent protein or enzyme, also called "parent enzyme") is the starting sequence for introduction of changes (e.g. by introducing one or more amino acid substitutions, insertions, deletions, or a combination thereof) to the sequence, resulting in "variants" of the parent sequences. The term parent enzyme (or parent sequence) includes wild-type enzymes (sequences) and synthetically generated sequences (enzymes) which are used as starting sequences for introduction of (further) changes.

The term "enzyme variant" or "sequence variant" or "variant enzyme" refers to an enzyme that differs from its parent enzyme in its amino acid sequence to a certain extent. If not indicated otherwise, variant enzyme "having enzymatic activity" means that this variant enzyme has the same type of enzymatic activity as the respective parent enzyme.

In describing the variants of the present invention, the nomenclature described as follows is used:

Amino acid substitutions are described by providing the original amino acid of the parent enzyme followed by the number of the position within the amino acid sequence, followed by the substituted amino acid. Amino acid deletions are described by providing the original amino acid of the parent enzyme followed by the number of the position within the amino acid sequence, followed by *. Amino acid insertions are described by providing the original amino acid of the parent enzyme followed by the number of the position within the amino acid sequence, followed by the original amino acid and the additional amino acid. For example, an insertion at position 180 of lysine next to glycine is designated as "Gly180GlyLys" or "G180GK". In cases where a substitution and an insertion occur at the same position, this may be indicated as S99SD+S99A or in short S99AD. In cases where an amino acid residue identical to the existing amino acid residue is inserted, degeneracy in the nomenclature arises. If for example a glycine is inserted after the glycine in the above example this would be indicated by G180GG. Where different alterations can be introduced at a position, the different alterations are separated by a comma, e.g. "Arg170Tyr, Glu" represents a substitution of arginine at position 170 with tyrosine or glutamic acid. Alternatively, different alterations or optional substitutions may be indicated in brackets e.g. Arg170[Tyr, Gly] or Arg170{Tyr, Gly}; or in short R170 [Y,G] or R170 {Y, G}; or in long R170Y, R170G.

Enzyme variants may be defined by their sequence identity when compared to a parent enzyme. Sequence identity usually is provided as "% sequence identity" or "% identity". For calculation of sequence identities, in a first step

a sequence alignment has to be produced. According to this invention, a pairwise global alignment has to be produced, meaning that two sequences have to be aligned over their complete length, which is usually produced by using a mathematical approach, called alignment algorithm. According to the invention, the alignment is generated by using the algorithm of Needleman and Wunsch (J. Mol. Biol. (1979) 48, p. 443-453). Preferably, the program "NEEDLE" (The European Molecular Biology Open Software Suite (EMBOSS)) is used for the purposes of the current invention, with using the programs default parameter (gap open=10.0, gap extend=0.5 and matrix=EBLOSUM62).

According to this invention, the following calculation of %-identity applies: %-identity = (identical residues / length of the alignment region which is showing the respective sequence of this invention over its complete length) *100.

According to this invention, enzyme variants may be described as an amino acid sequence which is at least n% identical to the amino acid sequence of the respective parent enzyme with "n" being an integer between 10 and 100. In one embodiment, variant enzymes are at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, or at least 99% identical when compared to the full-length amino acid sequence of the parent enzyme, wherein the enzyme variant has enzymatic activity.

"Enzymatic activity" means the catalytic effect exerted by an enzyme, which usually is expressed as units per milligram of enzyme (specific activity) which relates to molecules of substrate transformed per minute per molecule of enzyme (molecular activity). Variant enzymes may have enzymatic activity according to the present invention when said enzyme variants exhibit at least 20%, at least 25%, at least 30%, at least 35%, at least 40%, at least 45%, at 10 least 50%, at least 55%, at least 60%, at least 65%, at least 70%, at least 75%, at least 80%, at least 85%, at least 90%, at least 95%, or 100% of the enzymatic activity of the respective parent enzyme.

In one embodiment, enzyme is selected from hydrolases, preferably from proteases, amylases, lipases, cellulases, and mannanases.

In one embodiment of the present invention, inventive compositions comprise

(B) at least one lipase, hereinafter also referred to as lipase (B).

"Lipases", "lipolytic enzyme", "lipid esterase", all refer to enzymes of EC class 3.1.1 ("carboxylic ester hydrolase"). Such a lipase (B) may have lipase activity (or lipolytic activity; triacylglycerol lipase, EC 3.1.1.3), cutinase activity (EC 3.1.1.74; enzymes having cutinase activity may be called cutinase herein), sterol esterase activity (EC 3.1.1.13) and/or wax-ester hydrolase activity (EC 3.1.1.50). Lipases (B) include those of bacterial or fungal origin.

Commercially available lipase (B) include but are not limited to those sold under the trade names Lipolase™, Lipex™, Lipolex™ and Lipoclean™ (Novozymes A/S), Preferenz™ L (DuPont), Lumafast (originally from Genencor) and Lipomax (Gist-Brocades/ now DSM).

In one aspect of the present invention, lipase (B) is selected from the following: lipases from *Humicola* (synonym *Thermomyces),* e.g. from *H. lanuginosa (T. lanuginosus)* as described in EP 258068, EP 305216, WO 92/05249 and WO 2009/109500 or from *H. insolens* as described in WO 96/13580; lipases derived from *Rhizomucor miehei* as described in WO 92/05249; lipase from strains of *Pseudomonas* (some of these now renamed to *Burkholderia),* e.g. from P. *alcaligenes* or P. *pseudoalcaligenes* (EP 218272, WO 94/25578, WO 95/30744, WO 95/35381, WO 96/00292), *P. cepacia* (EP 331376), *P. stutzeri* (GB 1372034), *P. fluorescens, Pseudomonas sp.* strain SD705 (WO 95/06720 and WO 96/27002), P. *wisconsinensis* (WO 96/12012), *Pseudomonas mendocina* (WO 95/14783), *P. glumae* (WO 95/35381, WO 96/00292); lipase from *Streptomyces griseus* (WO 2011/150157) and S. *pristinaespiralis* (WO 2012/137147), GDSL-type *Streptomyces* lipases (WO 2010/065455); lipase from *Thermobifida fusca* as disclosed in WO 2011/084412; lipase from *Geobacillus stearothermophilus* as disclosed in WO 2011/084417; *Bacillus* lipases, e.g. as disclosed in WO 00/60063, lipases from B. *subtilis* as disclosed in Dartois et al. (1992), Biochemica et Biophysica Acta, 1131, 253-360 or WO 2011/084599, 8. *stearothermophilus* (JP S64-074992) or 8. *pumilus* (WO 91/16422); lipase from *Candida antarctica* as disclosed in WO 94/01541. Suitable lipases (B) include also those which are variants of the above described lipases which have lipolytic activity. Such suitable lipase variants are e.g. those which are developed by methods as disclosed in WO 95/22615, WO 97/04079, WO 97/07202, WO 00/60063, WO 2007/087508, EP 407225 and EP 260105. Suitable lipase variants are e.g. those which are developed by methods as disclosed in WO 95/22615, WO 97/04079, WO 97/07202, WO 00/60063, WO 2007/087508, EP 407225 and EP 260105.

Suitable lipases (B) include also those that are variants of the above described lipases which have lipolytic activity. Suitable lipase variants include variants with at least 40 to 100% identity when compared to the full length polypeptide sequence of the parent enzyme as disclosed above. In one embodiment lipase variants having lipolytic activity may be at least 40%, at least 45%, at least 50%, at least 55%, at least 60%, at least 65%, at least 70%, at least 75%, at least 80%, at least 85%, at least 90%, at least 91%, at least 92%, at least 93%, at least 94%, at least 95%, at least 96%, at least 97%, at least 98% or at least 99% identical when compared to the full length polypeptide sequence of the parent enzyme as disclosed above.

Lipases (B) have "lipolytic activity". The methods for determining lipolytic activity are well-known in the literature (see e.g. Gupta et al. (2003), Biotechnol. Appl. Biochem. 37, p. 63-71). E.g. the lipase activity may be measured by

ester bond hydrolysis in the substrate para-nitrophenyl palmitate (pNP-Palmitate, C:16) and releases pNP which is yellow and can be detected at 405 nm.

In one embodiment, lipase (B) is selected from fungal triacylglycerol lipase (EC class 3.1.1.3). Fungal triacylglycerol lipase may be selected from lipases of *Thermomyces lanuginosa.* In one embodiment, at least one *Thermomyces lanuginosa* lipase is selected from triacylglycerol lipase according to amino acids 1-269 of SEQ ID NO: 2 of US5869438 and variants thereof having lipolytic activity.

*Thermomyces lanuginosa* lipase may be selected from variants having lipolytic activity which are at least 90%, at least 91%, at least 92%, at least 93%, at least 94%, at least 95%, at least 96%, at least 97%, at least 98% or at least 99% identical when compared to the full length polypeptide sequence of amino acids 1-269 of SEQ ID NO: 2 of US 5,869,438.

*Thermomyces lanuginosa* lipase may be selected from variants having lipolytic activity comprising conservative mutations only, which do not pertain the functional domain of amino acids 1-269 of SEQ ID NO: 2 of US 5,869,438. Lipase variants of this embodiment having lipolytic activity may be at least 95%, at least 96%, at least 97%, at least 98% or at least 99% similar when compared to the full length polypeptide sequence of amino acids 1-269 of SEQ ID NO: 2 of US 5,869,438.

*Thermomyces lanuginosa* lipase may be selected from variants having lipolytic activity comprising at least the following amino acid substitutions when compared to amino acids 1-269 of SEQ ID NO: 2 of US 5,869,438: T231R and N233R. Said lipase variants may further comprise one or more of the following amino acid exchanges when compared to amino acids 1-269 of SEQ ID NO: 2 of US 5,869,438: Q4V, V60S, A150G, L227G, P256K.

*Thermomyces lanuginosa* lipase may be selected from variants having lipolytic activity comprising at least the amino acid substitutions T231R, N233R, Q4V, V60S, A150G, L227G, P256K within the polypeptide sequence of amino acids 1-269 of SEQ ID NO: 2 of US 5,869,438and are at least 95%, at least 96%, or at least 97% similar when compared to the full length polypeptide sequence of amino acids 1-269 of SEQ ID NO: 2 of US 5,869,438.

*Thermomyces lanuginosa* lipase may be selected from variants having lipolytic activity comprising the amino acid substitutions T231R and N233R within amino acids 1-269 of SEQ ID NO: 2 of US5869438 and are at least 95%, at least 96%, at least 97%, at least 98%, or at least 99% similar when compared to the full length polypeptide sequence of amino acids 1-269 of SEQ ID NO: 2 of US 5,869,438.

*Thermomyces lanuginosa* lipase may be a variant of amino acids 1-269 of SEQ ID NO: 2 of US5869438 having lipolytic activity, wherein the variant of amino acids 1-269 of SEQ ID NO: 2 of US 5,869,438is characterized in containing the amino acid substitutions T231R and N233R. Said lipase may be called Lipex herein.

In one embodiment of the present invention, a combination of at least two of the foregoing lipases (B) may be used.

In one embodiment of the present invention, lipases (B) are included in inventive composition in such an amount that a finished inventive composition has a lipolytic enzyme activity in the range of from 100 to 0.005 LU/mg, preferably 25 to 0.05 LU/mg of the composition. A Lipase Unit (LU) is that amount of lipase which produces 1 μmol of titratable fatty acid per minute in a pH stat. under the following conditions: temperature 30° C.; pH=9.0; substrate is an emulsion of 3.3 wt. % of olive oil and 3.3% gum arabic, in the presence of 13 mmol/l $Ca^{2+}$ and 20 mmol/l NaCl in 5 mmol/l Tris-buffer.

In one embodiment of the present invention, inventive compositions comprise

(B) at least one protease (B), hereinafter also referred to as protease (B).

In one embodiment, at least one protease (B) is selected from the group of serine endopeptidases (EC 3.4.21), most preferably selected from the group of subtilisin type proteases (EC 3.4.21.62). Serine proteases or serine peptidases are characterized by having a serine in the catalytically active site, which forms a covalent adduct with the substrate during the catalytic reaction. A serine protease in the context of the present invention may be selected from the group consisting of chymotrypsin (e.g., EC 3.4.21.1), elastase (e.g., EC 3.4.21.36), elastase (e.g., EC 3.4.21.37 or EC 3.4.21.71), granzyme (e.g., EC 3.4.21.78 or EC 3.4.21.79), kallikrein (e.g., EC 3.4.21.34, EC 3.4.21.35, EC 3.4.21.118, or EC 3.4.21.119,) plasmin (e.g., EC 3.4.21.7), trypsin (e.g., EC 3.4.21.4), thrombin (e.g., EC 3.4.21.5), and subtilisin. Subtilisin is also known as subtilopeptidase, e.g., EC 3.4.21.62, the latter hereinafter also being referred to as "subtilisin". The subtilisin related class of serine proteases shares a common amino acid sequence defining a catalytic triad which distinguishes them from the chymotrypsin related class of serine proteases. Subtilisins and chymotrypsin related serine proteases both have a catalytic triad comprising aspartate, histidine and serine.

Proteases are active proteins exerting "protease activity" or "proteolytic activity". Proteolytic activity is related to the rate of degradation of protein by a protease or proteolytic enzyme in a defined course of time.

The methods for analyzing proteolytic activity are well-known in the literature (see e.g. Gupta et al. (2002), Appl. Microbiol. Biotechnol. 60: 381-395). Proteolytic activity may be determined by using Succinyl-Ala-Ala-Pro-Phe-p-nitroanilide (Suc-AAPF-pNA, short AAPF; see e.g. DelMar et al. (1979), Analytical Biochem 99, 316-320) as substrate. pNA is cleaved from the substrate molecule by proteolytic cleavage, resulting in release of yellow color of free pNA which can be quantified by measuring $OD_{405}$.

Proteolytic activity may be provided in units per gram enzyme. For example, 1 U protease may correspond to

the amount of protease which sets free 1 μmol folin-positive amino acids and peptides (as tyrosine) per minute at pH 8.0 and 37°C (casein as substrate).

Proteases of the subtilisin type (EC 3.4.21.62) may be bacterial proteases originating from a microorganism selected from *Bacillus, Clostridium, Enterococcus, Geobacillus, Lactobacillus, Lactococcus, Oceanobacillus, Staphylococcus, Streptococcus,* or *Streptomyces* protease, or a Gram-negative bacterial polypeptide such as a *Campylobacter, E. coli, Flavobacterium, Fuso-bacterium, Helicobacter, Ilyobacter, Neisseria, Pseudomonas, Salmonella,* and *Ureaplasma.*

In one aspect of the invention, at least one protease (D) is selected from *Bacillus alcalophilus, Bacillus amyloliquefaciens, Bacillus brevis, Bacillus circulans, Bacillus clausii, Bacillus coagu-lans, Bacillus firmus, Bacillus gibsonii, Bacillus lautus, Bacillus lentus, Bacillus licheniformis, Bacillus megaterium, Bacillus pumilus, Bacillus sphaericus, Bacillus stearothermophilus, Bacillus subtilis,* or *Bacillus thuringiensis* protease.

In one embodiment of the present invention, at least one protease (B) is selected from the following: subtilisin from *Bacillus amyloliquefaciens* BPN' (described by Vasantha et al. (1984) J. Bacteriol. Volume 159, p. 811-819 and JA Wells et al. (1983) in Nucleic Acids Research, Volume 11, p. 7911-7925); subtilisin from *Bacillus licheniformis* (subtilisin Carlsberg; disclosed in EL Smith et al. (1968) in J. Biol Chem, Volume 243, pp. 2184-2191, and Jacobs et al. (1985) in Nucl. Acids Res, Vol 13, p. 8913-8926); subtilisin PB92 (original sequence of the alkaline protease PB92 is described in EP 283075 A2); subtilisin 147 and/or 309 (Esperase®, Savinase®, respectively) as disclosed in WO 89/06279; subtilisin from *Bacillus lentus* as disclosed in WO 91/02792, such as from *Bacillus lentus* DSM 5483 or the variants of *Bacillus lentus* DSM 5483 as described in WO 95/23221; subtilisin from *Bacillus alcalophilus* (DSM 11233) disclosed in DE 10064983; subtilisin from *Bacillus gibsonii* (DSM 14391) as disclosed in WO 2003/054184; subtilisin from *Bacillus sp.* (DSM 14390) disclosed in WO 2003/056017; subtilisin from *Bacillus sp.* (DSM 14392) disclosed in WO 2003/055974; subtilisin from *Bacillus gibsonii* (DSM 14393) disclosed in WO 2003/054184; subtilisin having SEQ ID NO: 4 as described in WO 2005/063974; subtilisin having SEQ ID NO: 4 as described in WO 2005/103244; subtilisin having SEQ ID NO: 7 as described in WO 2005/103244; and subtilisin having SEQ ID NO: 2 as described in application DE 102005028295.4.

Examples of useful proteases (B) in accordance with the present invention comprise the variants described in: WO 92/19729, WO 95/23221, WO 96/34946, WO 98/20115, WO 98/20116, WO 99/11768, WO 01/44452, WO 02/088340, WO 03/006602, WO 2004/03186, WO 2004/041979, WO 2007/006305, WO 2011/036263, WO 2011/036264, and WO 2011/072099. Suitable examples comprise especially variants of subtilisin protease derived from SEQ ID NO:22 as described in EP 1921147 (which is the sequence of mature alkaline protease from *Bacillus lentus* DSM 5483) with amino acid substitutions in one or more of the following positions: 3, 4, 9, 15, 24, 27, 33, 36, 57, 68, 76, 77, 87, 95, 96, 97, 98, 99, 100, 101, 102, 103, 104, 106, 118, 120, 123, 128, 129, 130, 131, 154, 160, 167, 170, 194, 195, 199, 205, 206, 217, 218, 222, 224, 232, 235, 236, 245, 248, 252 and 274 (according to the BPN' numbering), which have proteolytic activity. In one embodiment, such a protease is not mutated at positions Asp32, His64 and Ser221 (according to BPN' numbering).

In one embodiment, at least one protease (B) has a sequence according to SEQ ID NO:22 as described in EP 1921147, or a protease which is at least 80% identical thereto and has proteolytic activity. In one embodiment, said protease is characterized by having amino acid glutamic acid (E), or aspartic acid (D), or asparagine (N), or glutamine (Q), or alanine (A), or glycine (G), or serine (S) at position 101 (according to BPN' numbering) and has proteolytic activity. In one embodiment, said protease comprises one or more further substitutions: (a) threonine at position 3 (3T), (b) isoleucine at position 4 (4I), (c) alanine, threonine or arginine at position 63 (63A, 63T, or 63R), (d) aspartic acid or glutamic acid at position 156 (156D or 156E), (e) proline at position 194 (194P), (f) methionine at position 199 (199M), (g) isoleucine at position 205 (205I), (h) aspartic acid, glutamic acid or glycine at position 217 (217D, 217E or 217G), (i) combinations of two or more amino acids according to (a) to (h).

At least one protease (B) may be at least 80% identical to SEQ ID NO:22 as described in EP 1921147 and is characterized by comprising one amino acid (according to (a)-(h)) or combinations according to (i) together with the amino acid 101E, 101D, 101N, 101Q, 101A, 101G, or 101S (according to BPN' numbering). In one embodiment, said protease is characterized by comprising the mutation (according to BPN' numbering) R101E, or S3T + V4I + V205I, or R101E and S3T, V4I, and V205I, or S3T + V4I + V199M + V205I + L217D, and having proteolytic activity.

In one embodiment, protease according to SEQ ID NO:22 as described in EP 1921147 is characterized by comprising the mutation (according to BPN' numbering) S3T + V4I + S9R + A15T + V68A + D99S + R101S + A103S + I104V + N218D, and having proteolytic activity.

The inventive composition may comprise a combination of at least two proteases, preferably selected from the group of serine endopeptidases (EC 3.4.21), more preferably selected from the group of subtilisin type proteases (EC 3.4.21.62) - all as disclosed above.

It is preferred to use a combination of lipase (B) and protease (B) in compositions, for example 1 to 2% by weight of protease (B) and 0.1 to 0.5% by weight of lipase (B), both referring to the total weight of the composition.

In the context of the present invention, lipase (B) and/or protease (B) is deemed called stable when its enzymatic activity "available in application" equals at least 60% when compared to the initial enzymatic activity before storage. An enzyme may be called stable within this invention if its enzymatic activity available in application is at least 60%, at least

65%, at least 70%, at least 75%, at least 80%, at least 85%, at least 90%, at least 91%, at least 92%, at least 93%, at least 94%, at least 95%, at least 96%, at least 97%, at least 98%, at least 99%, or at least 99.5% when compared to the initial enzymatic activity before storage.

Subtracting a% from 100% gives the "loss of enzymatic activity during storage" when compared to the initial enzymatic activity before storage. In one embodiment, an enzyme is stable according to the invention when essentially no loss of enzymatic activity occurs during storage, i.e. loss in enzymatic activity equals 0% when compared to the initial enzymatic activity before storage. Essentially no loss of enzymatic activity within this invention may mean that the loss of enzymatic activity is less than 30%, less than 25%, less than 20%, less than 15%, less than 10%, less than 9%, less than 8%, less than 7%, less than 6%, less than 5%.

Particularly advantageous laundry detergent compositions and of detergent compositions for cleaners, especially for automatic dishwashing may contain one or more complexing agent to remove water hardness. Advantageous detergent compositions for cleaners and advantageous laundry detergent compositions may contain one or more complexing agent (in the context of the present invention also referred to as sequestrant). Examples for sequestrants are alkali metal salts of MGDA (methyl glycine diacetic acid), GLDA (glutamic acid diacetic acid), IDS (im-inodisuccinate), citric acid, phosphonic acid derivatives, for example the disodium salt of hydroxyethane-1,1-diphosphonic acid ("HEDP"), and polymers with complexing groups like, for example, polyethyleneimine in which 20 to 90 mole-% of the N-atoms bear at least one $CH_2COO^-$ group, and their respective alkali metal salts, especially their sodium salts, for example GLDA-$Na_4$, IDS-$Na_4$, and trisodium citrate, and phosphates such as STPP (sodium tripolyphosphate). Due to the environmental concerns raised in the context with the use of phosphates, it is preferred that advantageous detergent compositions for hard surface cleaning and advantageous laundry detergent compositions are free from phosphate. "Free from phosphate" should be understood in the context of the present invention, as meaning that the content of phosphate and polyphosphate is in sum in the range from 10 ppm to 0.2% by weight, determined by gravimetry.

Preferred sequestrants are those according to general formula (II a)

$$[CH_3\text{-}CH(COO)\text{-}N(CH_2\text{-}COO)_2]M_{3\text{-}x}H_x \qquad \text{(II a)}$$

wherein M is selected from ammonium and alkali metal cations, same or different, for example cations of sodium, potassium, and combinations of at least two of the foregoing. Ammonium may be substituted with alkyl but non-substituted ammonium $NH_4^+$ is preferred. Preferred examples of alkali metal cations are sodium and potassium and combinations of sodium and potassium, and even more preferred in compound according to general formula (II a) all M are the same and they are all Na;

and x in formula (II a) is in the range of from 0.01 to 1.0, preferably 0.015 to 0.2,

or (II b)

$$[OOC\text{-}CH_2CH_2\text{-}CH(COO)\text{-}N(CH_2\text{-}COO)_2]M_{4\text{-}x}H_x \qquad \text{(II b)}$$

wherein M is as defined above, and x in formula (II b) is in the range of from 0.01 to 2.0, preferably 0.015 to 1.0,

or (II c)

$$[OOC\text{-}CH_2\text{-}CH(COO)]\text{-}N\text{-}CH(COO)\text{-}CH_2\text{-}COO]M_{4\text{-}x}H_x \qquad \text{(II c)}$$

wherein M is as defined above, and x in formula (II c) is in the range of from 0.01 to 2.0, preferably 0.015 to 1.0.

In one embodiment of the present invention, said detergent composition for laundry care or hard surface cleaning contains a combination of at least two of the foregoing, for example a combination of chelating agent according to general formula (II a) and a chelating agent according to general formula (II b).

Chelating agents according to the general formula (II a) are preferred.

In one embodiment of the present invention, compound according to general formula (II a) is selected from at least one ammonium or alkali metal salt of racemic MGDA and from ammonium and alkali metal salts of mixtures of L- and D-enantiomers according to formula (II a), said mixture containing predominantly the respective L-isomer with an enantiomeric excess (ee) in the range of from 5 to 99%, preferably 5 to 95%, more preferably from 10 to 75% and even more preferably from 10 to 66%.

In one embodiment of the present invention, compound according to general formula (II b) is selected from at least one alkali metal salt of a mixture of L- and D- enantiomers according to formula (II b), said mixture containing the

racemic mixture or preferably predominantly the respective L-isomer, for example with an enantiomeric excess (ee) in the range of from 5 to 99%, preferably 15 to 95%.

The enantiomeric excess of compound according to general formula (II a) may be determined by measuring the polarization (polarimetry) or preferably by chromatography, for example by HPLC with a chiral column, for example with one or more cyclodextrins as immobilized phase or with a ligand exchange (Pirkle-brush) concept chiral stationary phase. Preferred is determination of the ee by HPLC with an immobilized optically active amine such as D-penicillamine in the presence of copper(+II) salt. The enantiomeric excess of compound according to general formula (II b) salts may be determined by measuring the polarization (polarimetry).

Advantageous detergent compositions for hard surface cleaners and advantageous laundry detergent compositions may contain one or more surfactant (C), preferably one or more non-ionic surfactants (C).

Preferred non-ionic surfactants are alkoxylated alcohols, di- and multiblock copolymers of ethylene oxide and propylene oxide and reaction products of sorbitan with ethylene oxide or propylene oxide, alkyl polyglycosides (APG), hydroxyalkyl mixed ethers and amine oxides.

Examples of anionic surfactants (C) are alkali metal and ammonium salts of $C_8$-$C_{18}$-alkyl sulfates, of $C_8$-$C_{18}$-fatty alcohol polyether sulfates, of sulfuric acid half-esters of ethoxylated $C_4$-$C_{12}$-alkylphenols (ethoxylation: 1 to 50 mol of ethylene oxide/mol), $C_{12}$-$C_{18}$ sulfo fatty acid alkyl esters, for example of $C_{12}$-$C_{18}$ sulfo fatty acid methyl esters, furthermore of $C_{12}$-$C_{18}$-alkylsulfonic acids and of $C_{10}$-$C_{18}$-alkylarylsulfonic acids. Preference is given to the alkali metal salts of the aforementioned compounds, particularly preferably the sodium salts.

Further examples of anionic surfactants (C) are soaps, for example the sodium or potassium salts of stearic acid, oleic acid, palmitic acid, ether carboxylates, and alkylether phosphates.

In a preferred embodiment of the present invention, anionic surfactant (C) is selected from compounds according to general formula (III)

$$R^1\text{-}O(CH_2CH_2O)_x\text{-}SO_3M \qquad \text{(III)}$$

wherein

- $R^1$ n-$C_{10}$-$C_{18}$-alkyl, especially with an even number of carbon atoms, for example n-decyl, n-dodecyl, n-tetradecyl, n-hexadecyl, or n-octadecyl, preferably $C_{10}$-$C_{14}$-alkyl, and even more preferably n-$C_{12}$-alkyl,
- x being a number in the range of from 1 to 5, preferably 2 to 4 and even more preferably 3.
- M being selected from alkali metals, preferably potassium and even more preferably sodium.

In anionic surfactant (C), x may be an average number and therefore n is not necessarily a whole number, while in individual molecules according to formula (III), x denotes a whole number.

In one embodiment of the present invention, inventive compositions may contain 0.1 to 60 % by weight of anionic surfactant (C), preferably 5 to 50 % by weight.

Inventive compositions may comprise ingredients other than the aforementioned. Examples are non-ionic surfactants, fragrances, dyestuffs, biocides, preservatives, enzymes, hydrotropes, viscosity modifiers, polymers, buffers, defoamers, and anti-corrosion additives.

Preferred inventive compositions may contain one or more non-ionic surfactants.

Preferred non-ionic surfactants are alkoxylated alcohols, di- and multiblock copolymers of ethylene oxide and propylene oxide and reaction products of sorbitan with ethylene oxide or propylene oxide, alkyl polyglycosides (APG), hydroxyalkyl mixed ethers and amine oxides.

Preferred examples of alkoxylated alcohols and alkoxylated fatty alcohols are, for example, compounds of the general formula (IV a)

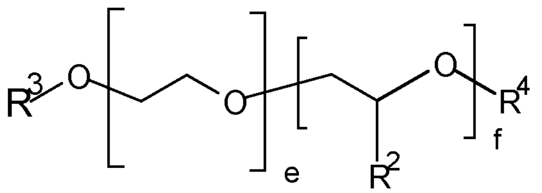

(IV a)

in which the variables are defined as follows:

- $R^2$ is identical or different and selected from hydrogen and linear $C_1$-$C_{10}$-alkyl, preferably in each case identical and ethyl and particularly preferably hydrogen or methyl,

$R^3$ is selected from $C_8$-$C_{22}$-alkyl, branched or linear, for example n-$C_8H_{17}$, n-$C_{10}H_{21}$, n-$C_{12}H_{25}$, n-$C_{14}H_{29}$, n-$C_{16}H_{33}$ or n-$C_{18}H_{37}$,

$R^4$ is selected from $C_1$-$C_{10}$-alkyl, methyl, ethyl, n-propyl, isopropyl, n-butyl, isobutyl, sec-butyl, tert-butyl, n-pentyl, isopentyl, sec-pentyl, neopentyl, 1,2-dimethylpropyl, isoamyl, n-hexyl, isohexyl, sec-hexyl, n-heptyl, n-octyl, 2-ethylhexyl, n-nonyl, n-decyl or isodecyl,

The variables e and f are in the range from zero to 300, where the sum of e and f is at least one, preferably in the range of from 3 to 50. Preferably, e is in the range from 1 to 100 and f is in the range from 0 to 30.
In one embodiment, compounds of the general formula (IV a) may be block copolymers or random copolymers, preference being given to block copolymers.
Other preferred examples of alkoxylated alcohols are, for example, compounds of the general formula (IV b)

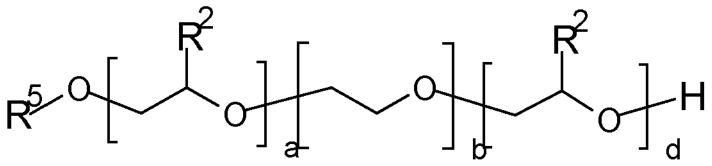

(IV b)

in which the variables are defined as follows:

$R^2$ is identical or different and selected from hydrogen and linear $C_1$-$C_0$-alkyl, preferably identical in each case and ethyl and particularly preferably hydrogen or methyl,

$R^5$ is selected from $C_6$-$C_{20}$-alkyl, branched or linear, in particular n-$C_8H_{17}$, n-$C_{10}H_{21}$, n-$C_{12}H_{25}$, n-$C_{13}H_{27}$, n-$C_{15}H_{31}$, n-$C_{14}H_{29}$, n-$C_{16}H_{33}$, n-$C_{18}H_{37}$,

a is a number in the range from zero to 10, preferably from 1 to 6,

b is a number in the range from 1 to 80, preferably from 4 to 20,

d is a number in the range from zero to 50, preferably 4 to 25.

The sum a + b + d is preferably in the range of from 5 to 100, even more preferably in the range of from 9 to 50.
Compounds of the general formula (IV b) may be block copolymers or random copolymers, preference being given to block copolymers.
Further suitable nonionic surfactants are selected from di- and multiblock copolymers, composed of ethylene oxide and propylene oxide. Further suitable nonionic surfactants are selected from ethoxylated or propoxylated sorbitan esters. Amine oxides or alkyl polyglycosides, especially linear $C_4$-$C_{16}$-alkyl polyglucosides and branched $C_8$-$C_{14}$-alkyl polyglycosides such as compounds of general average formula (IV c) are likewise suitable.

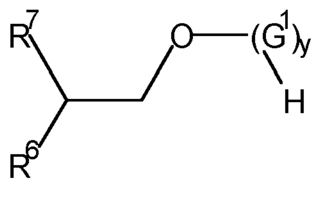

(IV c)

wherein:

$R^6$ is $C_1$-$C_4$-alkyl, in particular ethyl, n-propyl or isopropyl,
$R^7$ is $-(CH_2)_2-R^6$,
$G^1$ is selected from monosaccharides with 4 to 6 carbon atoms, especially from glucose and xylose,
y in the range of from 1.1 to 4, y being an average number,

Further examples of non-ionic surfactants are compounds of general formula (V) and (VI)

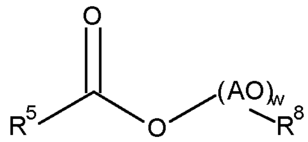

(V)

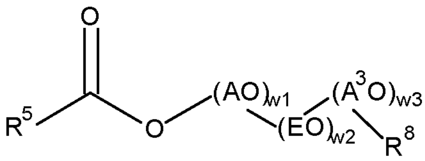

(VI)

AO is selected from ethylene oxide, propylene oxide and butylene oxide,
EO is ethylene oxide, $CH_2CH_2$-O,
$R^8$ selected from $C_8$-$C_{18}$-alkyl, branched or linear, and $R^5$ is defined as above.
$A^3O$ is selected from propylene oxide and butylene oxide,
w is a number in the range of from 15 to 70, preferably 30 to 50,
w1 and w3 are numbers in the range of from 1 to 5, and
w2 is a number in the range of from 13 to 35.

An overview of suitable further nonionic surfactants can be found in EP-A 0 851 023 and in DE-A 198 19 187.

Mixtures of two or more different nonionic surfactants selected from the foregoing may also be present.

Other surfactants that may be present are selected from amphoteric (zwitterionic) surfactants and anionic surfactants and mixtures thereof.

Examples of amphoteric surfactants are those that bear a positive and a negative charge in the same molecule under use conditions. Preferred examples of amphoteric surfactants are so-called betaine-surfactants. Many examples of betaine-surfactants bear one quaternized nitrogen atom and one carboxylic acid group per molecule. A particularly preferred example of amphoteric surfactants is cocamidopropyl betaine (lauramidopropyl betaine).

Examples of amine oxide surfactants are compounds of the general formula (VII)

$$R^9R^{10}R^{11}N \rightarrow O \qquad (VII)$$

wherein $R^9$, $R^{10}$, and $R^{11}$ are selected independently from each other from aliphatic, cycloaliphatic or $C_2$-$C_4$-alkylene $C_{10}$-$C_{20}$-alkylamido moieties. Preferably, $R^9$ is selected from $C_8$-$C_{20}$-alkyl or $C_2$-$C_4$-alkylene $C_{10}$-$C_{20}$-alkylamido and $R^{10}$ and $R^{11}$ are both methyl.

A particularly preferred example is lauryl dimethyl aminoxide, sometimes also called lauramine oxide. A further particularly preferred example is cocamidylpropyl dimethylaminoxide, sometimes also called cocamidopropylamine oxide.

In one embodiment of the present invention, inventive compositions may contain 0.1 to 60 % by weight of at least one surfactant, selected from non-ionic surfactants, amphoteric surfactants and amine oxide surfactants.

In a preferred embodiment, inventive solid detergent compositions for cleaners and especially those for automatic dishwashing do not contain any anionic surfactant.

Inventive compositions may contain at least one bleaching agent, also referred to as bleach. Bleaching agents may be selected from chlorine bleach and peroxide bleach, and peroxide bleach may be selected from inorganic peroxide bleach and organic peroxide bleach. Preferred are inorganic peroxide bleaches, selected from alkali metal percarbonate, alkali metal perborate and alkali metal persulfate, especially sodium percarbonate, $Na_2CO_3 \cdot 1.5\ H_2O_2$.

Examples of organic peroxide bleaches are organic percarboxylic acids, especially organic percarboxylic acids.

In inventive compositions, alkali metal percarbonates, especially sodium percarbonates, are preferably used in coated form. Such coatings may be of organic or inorganic nature. Examples are glycerol, sodium sulfate, silicate, sodium carbonate, and combinations of at least two of the foregoing, for example combinations of sodium carbonate and sodium sulfate.

Suitable chlorine-containing bleaches are, for example, 1,3-dichloro-5,5-dimethylhydantoin, N-chlorosulfamide, chloramine T, chloramine B, sodium hypochlorite, calcium hypochlorite, magnesium hypochlorite, potassium hypochlorite, potassium dichloroisocyanurate and sodium dichloroisocyanurate.

Inventive compositions may comprise, for example, in the range from 3 to 10% by weight of chlorine-containing bleach.

Inventive compositions may comprise one or more bleach catalysts. Bleach catalysts can be selected from

bleach-boosting transition metal salts or transition metal complexes such as, for example, manganese-, iron-, cobalt-, ruthenium- or molybdenum-salen complexes or carbonyl complexes. Manganese, iron, cobalt, ruthenium, molybdenum, titanium, vanadium and copper complexes with nitrogen-containing tripod ligands and also cobalt-, iron-, copper- and ruthenium-amine complexes can also be used as bleach catalysts.

Inventive compositions may comprise one or more bleach activators, for example N-methylmorpholinium-acetonitrile salts ("MMA salts"), trimethylammonium acetonitrile salts, N-acylimides such as, for example, N-nonanoylsuccinimide, 1,5-diacetyl-2,2-dioxohexahydro-1,3,5-triazine ("DADHT") or nitrile quats (trimethylammonium acetonitrile salts).

Further examples of suitable bleach activators are tetraacetylethylenediamine (TAED) and tetraacetylhexylenediamine.

Examples of fragrances are benzyl salicylate, 2-(4-tert.-butylphenyl) 2-methylpropional, commercially available as Lilial®, and hexyl cinnamaldehyde.

Examples of dyestuffs are Acid Blue 9, Acid Yellow 3, Acid Yellow 23, Acid Yellow 73, Pigment Yellow 101, Acid Green 1, Solvent Green 7, and Acid Green 25.

Inventive compositions may contain one or more preservatives or biocides. Biocides and preservatives prevent alterations of inventive liquid detergent compositions due to attacks from microorganisms. Examples of biocides and preservatives are BTA (1,2,3-benzotriazole), benzalkonium chlorides, 1,2-benzisothiazolin-3-one ("BIT"), 2-methyl-2H-isothiazol-3-one ("MIT") and 5-chloro-2-methyl-2H-isothiazol-3-one ("CIT"), benzoic acid, sorbic acid, iodopropynyl butylcarbamate ("IPBC"), dichlorodimethylhydantoine ("DCDMH"), bromochlorodimethylhydantoine ("BCDMH"), and dibromodimethylhydantoine ("DBDMH").

Examples of viscosity modifiers are agar-agar, carragene, tragacanth, gum arabic, alginates, pectins, hydroxyethyl cellulose, hydroxypropyl cellulose, starch, gelatin, locust bean gum, cross-linked poly(meth)acrlyates, for example polyacrlyic acid cross-linked with bis-(meth)acrylamide, furthermore silicic acid, clay such as - but not limited to - montmorrilionite, zeolite, dextrin, and casein.

Hydrotropes in the context with the present invention are compounds that facilitate the dissolution of compounds that exhibit limited solubility in water. Examples of hydrotropes are organic solvents such as ethanol, isopropanol, ethylene glycol, 1,2-propylene glycol, and further organic solvents that are water-miscible under normal conditions without limitation. Further examples of suitable hydrotropes are the sodium salts of toluene sulfonic acid, of xylene sulfonic acid, and of cumene sulfonic acid.

Examples of polymers other than polymer (A) are especially polyacrylic acid and its respective alkali metal salts, especially its sodium salt. A suitable polymer is in particular polyacrylic acid, preferably with an average molecular weight $M_w$ in the range from 2,000 to 40,000 g/mol. preferably 2,000 to 10,000 g/mol, in particular 3,000 to 8,000 g/mol, each partially or fully neutralized with alkali, especially with sodium. Suitable as well are copolymeric polycarboxylates, in particular those of acrylic acid with methacrylic acid and of acrylic acid or methacrylic acid with maleic acid and/or fumaric acid. Polyacrylic acid and its respective alkali metal salts may serve as soil anti-redeposition agents.

Further examples of polymers are polyvinylpyrrolidones (PVP). Polyvinylpyrrolidones may serve as dye transfer inhibitors.

Further examples of polymers are polyethylene terephthalates, polyoxyethylene terephthalates, and polyethylene terephthalates that are end-capped with one or two hydrophilic groups per molecule, hydrophilic groups being selected from $CH_2CH_2CH_2-SO_3Na$, $CH_2CH(CH_2-SO_3Na)_2$, and $CH_2CH(CH_2SO_2Na)CH_2-SO_3Na$.

Examples of buffers are monoethanolamine and N,N,N-triethanolamine.

Examples of defoamers are silicones.

Inventive compositions are not only good in cleaning soiled laundry with respect to organic fatty soil such as oil. Inventive liquid detergent compositions are very useful for removing non-bleachable stains such as, but not limited to stains from red wine, tea, coffee, vegetables, and various fruit juices like berry juices from laundry. They still do not leave residues on the clothes.

In order to be suitable as liquid laundry compositions, inventive compositions may be in bulk form or as unit doses, for example in the form of sachets or pouches. Suitable materials for pouches are water-soluble polymers such as polyvinyl alcohol.

In a preferred embodiment of the present invention, inventive compositions are liquid or gel-type.

In one embodiment of the present invention, inventive compositions are liquid or gel-type and have a pH value in the range of from 7 to 9, preferably 7.5 to 8.5.

In one embodiment of the present invention, inventive compositions are liquid or gel-type and have a total solids content in the range of from 8 to 80%, preferably 10 to 50%, determined by drying under vacuum at 80°C.

A further aspect of the present invention is directed to the use of inventive compositions for laundry care or hard surface cleaning.

In the context of the present invention, the term "detergent composition for hard surface cleaners" includes cleaners for home care and for industrial or institutional applications. The term "detergent composition for cleaners"

includes compositions for dishwashing, especially hand dishwash and automatic dishwashing and ware-washing, and compositions for hard surface cleaning such as, but not limited to compositions for bathroom cleaning, kitchen cleaning, floor cleaning, descaling of pipes, window cleaning, car cleaning including truck cleaning, furthermore, open plant cleaning, cleaning-in-place, metal cleaning, disinfectant cleaning, farm cleaning, high pressure cleaning, but not laundry detergent compositions.

In the context of the present invention and unless expressly stated otherwise, percentages in the context of ingredients of laundry detergent compositions are percentages by weight and refer to the total solids content of the respective laundry detergent composition. In the context of the present invention and unless expressly stated otherwise, percentages in the context of ingredients of detergent composition for hard surface cleaners are percentages by weight and refer to the total solids content of the detergent composition for hard surface cleaning.

The invention is further illustrated by the following working examples.

I. Synthesis of a polymer (A)

1.1 Synthesis of cores (a)

1.1.1 Synthesis of core (a.1)

Core (a.1) was synthesized from 1.2 mol (332 g) triethylcitrate and 3.34 mol (431 g) of methylcyclohexane diamine ("MCDA") as a 4:1 mixture of

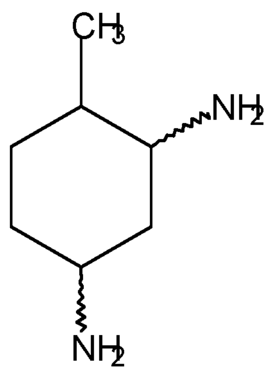

and

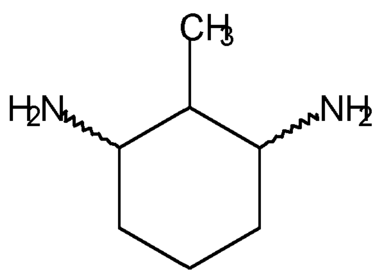

A 1-l flask with dropping funnel, nitrogen inlet, distillation overhead and stirrer was charged with 332 g triethylcitrate. Under stirring at ambient temperature, 431 g of MCDA were added dropwise in two portions over 10 minutes each. A slightly exothermic reaction was observed. The resultant colourless liquid was degassed under reduced pressure and then heated to 141 °C over a period of 8½ hours. The distillate, 155 g of ethanol, was collected. Then, the pressure was reduced to 410 mbar and stirring was continued while cooling the mixture to ambient temperature. As a result, 541 g of core (a.1) were isolated as a sticky solid red-black material.

GPC in hexafluoroisopropanol ("HFIP"): $M_n$ 667 g/mol, $M_w$ 4010 g/mol
Amine number: 402 mg KOH/g

1.1.2 Synthesis of core (a.2)

The protocol of 1.1.1 was basically repeated but the duration of reacting at 141°C was only 7 ½ hours. About 90 g of distillate were collected. As a result, 623 g of core (a.2) were isolated as a highly viscous, clear, red material.

GPC in HFIP: $M_n$ 407 g/mol, $M_w$ 1960 g/mol
Amine number: 425 mg KOH/g

1.1.3 Synthesis of core (a.3)

The protocol of 1.1.1 was basically repeated but the duration of reacting at 141°C was 10 hours. About 163 g of distillate were collected. As a result, 498 g of core (a.2) were isolated as a highly viscous, clear, red material.

GPC in HFIP: $M_n$ 1224 g/mol, $M_w$ 9008 g/mol

Amine number: 375 mg KOH/g

1.1.4 Synthesis of core (a.4)

The protocol of I.1.1 was basically repeated but 0.5 mol (138 g) triethylcitrate were combined with 1.4 mol (180 g) of MCDA.

A 1-l flask with dropping funnel, nitrogen inlet, distillation overhead and stirrer was charged with 138 g triethylcitrate. Under stirring at ambient temperature, 180 g of MCDA were added dropwise over 10 minutes. A slightly exothermic reaction was observed. The resultant colourless liquid was degassed under reduced pressure and then heated to 95 °C over a period of 2 hours and then to 112 °C for another 2 hours. The distillate was collected (ca. 23 g). Then, the pressure was reduced to 410 mbar and stirring was continued while cooling the mixture to ambient temperature. As a result, 285 g of core (a.4) were isolated as a liquid, clear, red material.

GPC in HFIP: $M_n$ 341 g/mol, $M_w$ 1000 g/mol
Amine number: 458 mg KOH/g
GPC in HFIP: $M_n$ 1224 g/mol, $M_w$ 9008 g/mol
Amine number: 375 mg KOH/g

I.2 Alkoxylation

General: All analyses of the polymers were done by GPC in tetrahydrofuran (THF).

I.2.1 Synthesis of polymer (A.1.1): core (a.1) with 20 ethoxy groups per primary amino group

A 2-l autoclave was charged with 100.0 g core (a.1) and 10 g water and flushed with nitrogen. The autoclave was heated to 120 °C and 31 g ethylene oxide were dosed within 10 minutes and the mixture was stirred for 16 hours. Then, 4 g of an aqueous potassium hydroxide solution (50% wt) were added and the water was removed by heating the autoclave to 120 °C under reduced pressure. Then, 28 g ethylene oxide were added to the reaction mixture within 10 minutes and another 572 g ethylene oxide were added within 16 hours. The reaction mixture was allowed to react for additional 6 hours. Then the autoclave was cooled to 100 °C. The reaction mixture was stripped with nitrogen and volatile compounds were removed in vacuo at 80 °C. As a result, 731 g of polymer (A.1.1) were obtained.

I.2.2 Synthesis of polymer (A.1.2): core (a.1) with 10 ethoxy groups per primary amino group

The above protocol was repeated but with the addition of 184 g of ethylene oxide within 10 hours instead of afterwards 572 g ethylene oxide within 16 hours. As a result, 342 g of polymer (A.1.2) were obtained. The data are summarized in Table 1.

I.2.3 Synthesis of polymer (A.1.3): core (a.1) with 20 ethoxy groups and 10 propoxy groups per primary amino group

A 2-l autoclave was charged with 730 g polymer (A.1.1) and 4 g of an aqueous KOH solution (50 wt%) and flushed with nitrogen. Then, 4 g of an aqueous potassium hydroxide solution (50% wt) were added and the water was removed by heating the autoclave to 120 °C under reduced pressure. Subsequently, the autoclave was heated to 130°C, and 623 g propylene oxide were added within 16 hours. The reaction mixture was allowed to react for additional 6 hours. Then the autoclave was cooled to 100 °C. The reaction mixture was stripped with nitrogen and volatile compounds were removed in vacuo at 80 °C. As a result, 1353 g of polymer (A.1.3) were obtained.

I.2.4 Synthesis of polymer (A.1.4): core (a.1) with 15 ethoxy groups and 8 propoxy groups per primary amino group

A 2-l autoclave was charged with 100.0 g core (a.1) and 10 g water and flushed with nitrogen. The autoclave was heated to 120 °C and 31 g ethylene oxide were dosed within 10 minutes and the mixture was stirred for 16 hours. Then, 2 g of an aqueous potassium hydroxide solution (50% wt) were added and the water was removed by heating the autoclave to 120 °C under reduced pressure. Then, 28 g ethylene oxide were added to the reaction mixture within 10 minutes and another 414 g ethylene oxide were added within 16 hours. The reaction mixture was allowed to react for additional 4 hours. Subsequently, 333 g propylene oxide were added within 10 hours. The reaction mixture was allowed to react for additional 4 hours at 130°C. Then the autoclave was cooled to 100 °C. The reaction mixture was stripped with nitrogen and volatile compounds were removed in vacuo at 80 °C. As a result, 731 g of polymer (A.1.4) were obtained.

I.2.5 Synthesis of polymer (A.2.1): core (a.2) with 20 ethoxy groups per primary amino group

The protocol I.2.1 was repeated but with 100 g of core (a.2) instead of (a.1). As a result, 766 g of polymer (A.2.1) were obtained. The data are summarized in Table 1.

I.2.6 Synthesis of polymer (A.2.2): core (a.2) with 20 ethoxy groups and 16 propoxy groups per primary amino group

A 2-l autoclave was charged with 100.0 g core (a.2) and 10 g water and flushed with nitrogen. The autoclave was heated to 120 °C and 33 g ethylene oxide were dosed within 10 minutes and the mixture was stirred for 16 hours. Then, 4 g of an aqueous potassium hydroxide solution (50% wt) were added and the water was removed by heating the autoclave to 120 °C under reduced pressure. Then, 30 g ethylene oxide were added to the reaction mixture within 10 minutes and another 604 g ethylene oxide were added within 16 hours. The reaction mixture was allowed to react for additional 6 hours. Then the autoclave was cooled to 100 °C. The reaction mixture was stripped with nitrogen and volatile compounds were removed in vacuo at 80 °C. Then, 4 g of an aqueous potassium hydroxide solution (50% wt) were added and the water was removed by heating the autoclave to 120 °C under reduced pressure. Then, 704 g propylene oxide were added within 10 hours. The reaction mixture was allowed to react for additional 4 hours at 130°C. Then the autoclave was cooled to 100 °C. The reaction mixture was stripped with nitrogen and volatile compounds were removed in vacuo at 80 °C. As a result, 1,472 g of polymer (A.2.2) were obtained.

I.2.7 Synthesis of polymer (A.2.3): core (a.2) with 16 propoxy groups per primary amino group

A 2-l autoclave was charged with 100.0 g core (a.2) and 10 g water and flushed with nitrogen. The autoclave was heated to 120 °C and 44 g propylene oxide were dosed within 10 minutes and the mixture was stirred for 16 hours. Then, 4 g of an aqueous potassium hydroxide solution (50% wt) were added and the water was removed by heating the autoclave to 120 °C under reduced pressure. Then, 660 g propylene oxide were added within 12 hours. The reaction mixture was allowed to react for additional 6 hours. Then, the autoclave was cooled to 100 °C. The reaction mixture was stripped with nitrogen and volatile compounds were removed in vacuo at 80 °C. As a result, 804 g of polymer (A.2.3) were obtained.

I.2.8 Synthesis of polymer (A.3.1): core (a.3) ethoxylated with 20 ethoxy groups per primary amino group

The protocol I.2.1 was repeated but with 100 g of core (a.3) instead of (a.1). As a result, 689 g of polymer (A.3.1) were obtained. The data are summarized in Table 1.

I.2.9 Synthesis of polymer (A.3.2): core (a.3) with 20 ethoxy groups and 16 propoxy groups per primary amino group

A 2-l autoclave was charged with 100.0 g core (a.3) and 10 g water and flushed with nitrogen. The autoclave was heated to 120 °C and 30 g ethylene oxide were dosed within 10 minutes and the mixture was stirred for 16 hours. Then, 4 g of an aqueous potassium hydroxide solution (50% wt) were added and the water was removed by heating the autoclave to 120 °C under reduced pressure. Then, 25 g ethylene oxide were added to the reaction mixture within 10 minutes and another 534 g ethylene oxide were added within 16 hours. The reaction mixture was allowed to react for additional 6 hours. Then the autoclave was cooled to 100 °C. The reaction mixture was stripped with nitrogen and volatile compounds were removed in vacuo at 80 °C. Then, 4 g of an aqueous potassium hydroxide solution (50% wt) were added and the water was removed by heating the autoclave to 120 °C under reduced pressure. Then, 621 g propylene oxide were added within 10 hours. The reaction mixture was allowed to react for additional 4 hours at 130°C. Then the autoclave was cooled to 100 °C. The reaction mixture was stripped with nitrogen and volatile compounds were removed in vacuo at 80 °C. As a result, 1,310 g of polymer (A.3.2) were obtained.

I.2.10Synthesis of polymer (A.3.3): core (a.3) with 15 propoxy groups and 16 ethoxy groups per primary amino group

A 2-l autoclave was charged with 100.0 g core (a.3) and 10 g water and flushed with nitrogen. The autoclave was heated to 120 °C and 39 g propylene oxide were dosed within 10 minutes and the mixture was stirred for 16 hours. Then, 4 g of an aqueous potassium hydroxide solution (50% wt) were added and the water was removed by heating the autoclave to 120 °C under reduced pressure. Then, 30 g propylene oxide were added to the reaction mixture within 10 minutes and another 513 g propylene oxide were added within 16 hours. The reaction mixture was allowed to react for additional 6 hours. Then the autoclave was cooled to 100 °C. The reaction mixture was stripped with nitrogen and volatile compounds were removed in vacuo at 80 °C. Then, 4 g of an aqueous potassium hydroxide solution (50% wt) were added and the water was removed by heating the autoclave to 120 °C under reduced pressure. Then, 471 g ethylene

oxide were added within 10 hours. The reaction mixture was allowed to react for additional 4 hours at 130°C. Then the autoclave was cooled to 100 °C. The reaction mixture was stripped with nitrogen and volatile compounds were removed in vacuo at 80 °C. As a result, 1,310 g of polymer (A.3.3) were obtained.

Table 1: Properties of polymers (A)

| Polymer | $M_n$ [g/mol] | $M_w$ [g/mol] | PD | Hydroxyl number [mg KOH/g] |
|---|---|---|---|---|
| (A.1.1) | 5140 | 19650 | 3.82 | 146 |
| (A.1.2) | 1980 | 5410 | 2.73 | 360 |
| (A.1.3) | 10050 | 32100 | 3.19 | 91 |
| (A.1.4) | 6790 | 24400 | 3.59 | 138 |
| (A.2.1) | 3980 | 12740 | 3.20 | 152 |
| (A.2.2) | 8350 | 21900 | 2.62 | 97 |
| (A.2.3) | 4930 | 14250 | 2.89 | 172 |
| (A.3.1) | 9230 | 42120 | 4.56 | 132 |
| (A.3.2) | 20450 | 72410 | 3.54 | 87 |
| (A.3.3) | 17680 | 81025 | 4.58 | 99 |
| PD: $M_w/M_n$ | | | | |

II. Manufacture of inventive formulations

Protease (B.1): Lavergy 104 LS, a protease commercially available from BASF SE Quantities of the respective enzyme are tel quel.

Table 2. L.1 Ingredients of base mixture for a liquid detergent formulation

| ingredient | % by weight |
|---|---|
| Alkylbenzene sulfonic acid ($C_{10}$-$C_{13}$), Na salt | 5.5 |
| $C_{13}$/$C_{l5}$-Oxoalkohol reacted with 7 moles of EO | 5.4 |
| 1,2 propyleneglycol | 6 |
| ethanol | 2 |
| potassium coconut soap | 2.4 |
| NaOH | 2.2 |
| lauryl ether sulphate (C.1) | 5.4 |
| Sodium citrate | 3 |
| Water | to 100 |

III. Laundering tests

The primary wash performance of inventive formulations was tested in a washing machine preparing wash solutions using water of 14°dH hardness (2.5 mmol/L; Ca:Mg:$HCO_3$ 4:1:8) containing 3.0 g/L of the liquid test detergent L.1, see composition in Table 2, and 3.0% of the respective polymer (A) as well as 0.5% by weight of the protease (B.1).
For the performance test in the washing machine (Miele SOFTTRONIC W 1935 WTL, 30°C, short program, 1200 rpm, 3.5 kg ballast load), three multi-stain monitors (M1, M2, M3) were washed together with four SBL-2004 sheets (wfk Testgewebe GmbH, DE; corresponding to 64 grams of ballast soil) as additional soil ballast.
Multi-stain monitors for the washing machine tests:

M1:

PC-H144 Red pottery clay
KC-H115 Standard clay
P-H145 Tennis court clay
KC-H018 Clay, ground soil

M2:

wfk20D Sebum bey
EMPA 101 Olive oil/carbon black
EMPA 141/2 Lipstick medium soiled on cotton
CFT PC-S-04 Olive oil, colored
EMPA 114 Red Wine
EMPA 112 Cocoa
EMPA 116 Blood/milk/ink
CFT C-S-01 Blood, aged
CFT C-S-08 Grass
CFT C-10 Pigment/oil/milk
CFT PC-05 Blood/milk/ink

M3:

CFT CS-06 Salad dressing
CFT CS-80 Grass/mud
CFT C-05 Blood/milk/ink
EMPA 117 Blood/milk/ink
CFT C-03 Chocolate milk with soot
CFT CS-44 Chocolate drink pure
CFT C-11 Milk with carbon black
CFT C-S-70 Chocolate mousse
CFT C-S-38 Egg yolk with pigment, aged
CFT C-S-39 Full egg with pigment, aged

The total level of cleaning was evaluated using color measurements. Reflectance values of the stains on the monitors were measured using a sphere reflectance spectrometer (SF 500 type from Datacolor, USA, wavelength range 360-700nm, optical geometry d/8°) with a UV cutoff filter at 460 nm. In this case, with the aid of the CIE-Lab color space classification, the brightness L *, the value a * on the red - green color axis and the b * value on the yellow - blue color axis, were measured before and after washing and averaged for the respective stains of the monitor. The change of the color value (Delta E, ΔE) value, defined and calculated automatically by the evaluation color tools on the following formula,

$$\Delta E^*_{ab} = \sqrt{\Delta L^{*2} + \Delta a^{*2} + \Delta b^{*2}},$$

is a measure of the achieved cleaning effect. All experiments were repeated three times to provide a representative average number. Higher Delta E values show better cleaning. For each stain, a difference of 1 unit can be detected visually by a skilled person. A non-expert can visually detect 2 units easily. The ΔE values of the formulations for the 4,11 and 104 stains of correspondingly M1, M2 and M3 and for some selected single stains are shown in Table 3.

Table 3. Results of washing machine test fabric monitors

| Formulation L.1 (3 g/L) plus | ΔE MS1 (4 stains) | ΔE MS2 (11 stains) | ΔE MS3 (10 stains) | ΔE (PC-H144) MS1 | ΔE (wfk20D) MS2 | ΔE (CFT CS-06) MS3 |
|---|---|---|---|---|---|---|
| --- | 91.8 | 128.6 | 172.6 | 21.5 | 14.6 | 6.7 |
| 0.5% (B.1) | 94.3 | 172.4 | 295.5 | 21.3 | 14.3 | 8.7 |

(continued)

| Formulation L.1 (3 g/L) plus | ΔE MS1 (4 stains) | ΔE MS2 (11 stains) | ΔE MS3 (10 stains) | ΔE (PC-H144) MS1 | ΔE (wfk20D) MS2 | ΔE (CFT CS-06) MS3 |
|---|---|---|---|---|---|---|
| 3.0% (A.1.1) + 0,5% (B.1) | 99.3 | 183.1 | 312.6 | 24.1 | 15.8 | 9.6 |
| 3.0% (A.2.1) + 0.5% (B.1) | 95.7 | 176.3 | 300.7 | 22.1 | 14.9 | 8.5 |
| 3.0% (A.3.1) + 0.5% (B.1) | 103.8 | 190.1 | 320.8 | 26.2 | 16.5 | 10 |
| 3.0% (A.2.3) + 0.5% (B.1) | 96 | 181.8 | 304 | 22 | 17.5 | 9.4 |
| 3.0% (A.1.2) + 0.5% (B.1) | 95.2 | 175.2 | 298.2 | 21.8 | n.d. | 9.2 |
| 3.0% (A.1.4) + 0.5% (B.1) | 97.9 | 181.6 | 310.1 | 22.5 | 14.8 | 10.4 |
| 3.0% (A.1.3) + 0.5% (B.1) | 96.9 | 188.7 | 323.7 | 21.9 | 19.5 | 11.5 |
| 3.0% (A.3.2) + 0.5% (B.1) | 97 | 194.2 | 330.9 | 22.2 | 22.5 | 12.4 |
| 3.0% (A.3.3) + 0.5% (B.1) | 96.7 | 174.9 | 321 | 22.6 | 15.1 | 8.9 |
| n.d.: not determined | | | | | | |

In the above tests, an additional cleaning performance benefit can be seen with the polymers (A), also in combination with protease (B.1).

## Claims

1. Detergent composition comprising

   (A) at least one polymer comprising

      (a) a core obtained by

         reacting a diamine $H_2N\text{-}Z\text{-}NH_2$ with a polycarboxylic compound PC having a total number TN of carboxyl groups per molecule in the range of from 3 to 10,
         wherein Z is selected from $C_3$-$C_{12}$-cycloalkylene that may be non-substituted or substituted with one or more O-$C_1$-$C_4$-alkyl groups and wherein $C_3$-$C_{12}$-cycloalkylene may bear one to three methyl groups, and wherein carboxyl groups are selected from COOH and $COOX^1$ with $X^1$ being selected from $C_1$-$C_4$-alkyl, or two carboxyl groups together form an anhydride group,

      (b) and subsequent reaction with at least one $C_2$-$C_4$-alkylene oxide,

   (B) at least one hydrolase.

2. Composition according to claim 1 wherein Z is selected from cyclohexylene and cyclopentylene, each non-substituted or substituted with one to 2 methyl or methoxy groups.

3. Composition according to claim 1 or 2 wherein said hydrolase (B) is selected from proteases (B.1).

**4.** Composition according to claim 3 wherein said protease (B) is selected from subtilisin-type lipases (EC 3.4.21.62).

**5.** Composition according to any of the preceding claims wherein the polycarboxylic compound PC is selected from citric acid as ester wherein all carboxyl groups are esterified with methanol or ethanol.

**6.** Composition according to any of the preceding claims wherein the core (a) is made by reacting diamine and polycarboxylic compound PC in a molar ratio in the range of from 0.3 TN to 1 TN.

**7.** Composition according to any of the preceding claims wherein said polymer (A) has an average molecular weight $M_w$ in the range of from 1,500 to 80,000 g/mol.

**8.** Composition according to any of the preceding claims wherein Z is selected from combinations of

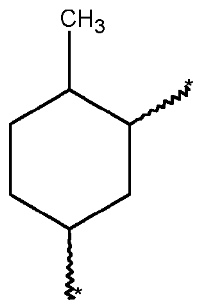

and

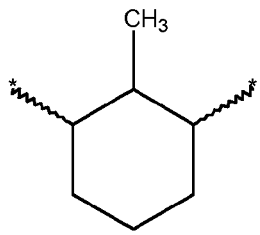

**9.** Composition according to any of the preceding claims, additionally comprising at least one builder component selected from alkali metal salts of aminopolycarboxylic acids and from alkali metal salts of (co)polymers of acrylic acid.

**10.** Use of a composition according to any of the preceding claims for laundry care or hard surface cleaning.

**Patentansprüche**

**1.** Detergenszusammensetzung, umfassend

(A) mindestens ein Polymer, umfassend

(a) einen Kern, der erhalten wird durch
Umsetzen eines Diamins $H_2N$-Z-$NH_2$ mit einer Polycarboxylverbindung PC mit einer Gesamtanzahl TN an Carboxylgruppen pro Molekül im Bereich von 3 bis 10, wobei Z ausgewählt ist aus $C_3$-$C_{12}$-Cycloalkylen, das unsubstituiert oder mit einer oder mehreren O-$C_1$-$C_4$-Alkylgruppen substituiert sein kann, und wobei $C_3$-$C_{12}$-Cycloalkylen eine bis drei Methylgruppen tragen kann, und wobei die Carboxylgruppen ausgewählt sind aus COOH und $COOX^1$, wobei $X^1$ ausgewählt ist aus $C_1$-$C_4$-Alkyl, oder zwei Carboxylgruppen zusammen eine Anhydridgruppe bilden,
(b) und nachfolgende Umsetzung mit mindestens einem $C_2$-$C_4$-Alkylenoxid,

(B) mindestens eine Hydrolase.

**2.** Zusammensetzung nach Anspruch 1, wobei Z ausgewählt ist aus Cyclohexylen und Cyclopentylen, jeweils unsubstituiert oder mit einer bis 2 Methyl- oder Methoxygruppen substituiert.

**3.** Zusammensetzung nach Anspruch 1 oder 2, wobei die Hydrolase (B) ausgewählt ist aus Proteasen (B).

**4.** Zusammensetzung nach Anspruch 3, wobei die Protease (B) ausgewählt ist aus Lipasen vom Typ Subtilisin (EC 3.4.21.62).

**5.** Zusammensetzung nach einem der vorhergehenden Ansprüche, wobei die Polycarboxylverbindung PC ausgewählt ist aus Citronensäure als Ester, wobei alle Carboxylgruppen mit Methanol oder Ethanol verestert sind.

**6.** Zusammensetzung nach einem der vorhergehenden Ansprüche, wobei der Kern (a) durch Umsetzen von Diamin und der Polycarboxylverbindung PC in einem molaren Verhältnis im Bereich von 0,3 TN bis 1·TN hergestellt wird.

**7.** Zusammensetzung nach einem der vorstehenden Ansprüche, wobei das Polymer (A) ein durchschnittliches Molekulargewicht Mw im Bereich von 1.500 bis 80.000 g/mol aufweist.

**8.** Zusammensetzung nach einem der vorstehenden Ansprüche, wobei Z ausgewählt ist aus Kombinationen von

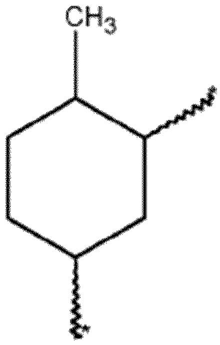

und

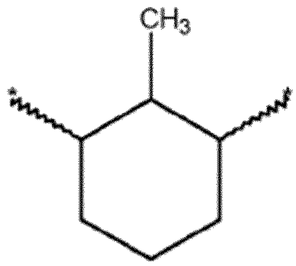

**9.** Zusammensetzung nach einem der vorhergehenden Ansprüche, die zudem mindestens eine Builder-Komponente ausgewählt aus Alkalimetallsalzen von Aminopolycarbonsäuren und von Alkalimetallsalzen von (Co)polymeren von Acrylsäure umfasst.

**10.** Verwendung einer Zusammensetzung nach einem der vorstehenden Ansprüche zur Wäschepflege oder Hartoberflächenreinigung.

## Revendications

**1.** Composition de détergent comprenant

(A) au moins un polymère comprenant

(a) un noyau obtenu par

mise en réaction d'une diamine $H_2N$-Z-$NH_2$ avec un composé polycarboxylique PC ayant un nombre total de TN de groupes carboxyle par molécule dans la plage allant de 3 à 10,
dans laquelle Z est sélectionné parmi $C_3$-$C_{12}$-cycloalkylène qui peut être non substitué ou substitué par un ou plusieurs groupes O-$C_1$-$C_4$-alkyle et dans laquelle $C_3$-$C_{12}$-cycloalkylène peut porter un à trois groupes méthyle,
et dans laquelle des groupes carboxyle sont sélectionnés parmi COOH et $COOX^1$, $X^1$ étant sélectionné parmi $C_1$-$C_4$-alkyle, ou deux groupes carbonyle formant ensemble un groupe anhydride,

(b) et une mise en réaction subséquente avec au moins un oxyde d'alkylène en $C_2$-$C_4$,

(B) au moins une hydrolase.

**2.** Composition selon la revendication 1, dans laquelle Z est sélectionné parmi cyclohexylène et cyclopentylène, chacun non substitué ou substitué par un à 2 groupes méthyle ou méthoxy.

**3.** Composition selon la revendication 1 ou 2, dans laquelle ladite hydrolase (B) est sélectionnée parmi des protéases (B).

**4.** Composition selon la revendication 3, dans laquelle ladite protéase (B) est sélectionnée parmi des lipases de type subtilisine (EC 3.4.21.62).

5. Composition selon l'une quelconque des revendications précédentes, dans laquelle le composé polycarboxylique PC est sélectionné parmi l'acide citrique comme ester, dans laquelle tous les groupes carboxyle sont estérifiés avec du méthanol ou de l'éthanol.

6. Composition selon l'une quelconque des revendications précédentes, dans laquelle le noyau (a) est préparé par mise en réaction d'une diamine et d'un composé polycarboxylique PC en un rapport molaire dans la plage allant de 0,3 TN et 1-TN.

7. Composition selon l'une quelconque des revendications précédentes, dans laquelle ledit polymère (A) a un poids moléculaire moyen Mw dans la plage allant de 1 500 à 80 000 g/mole.

8. Composition selon l'une quelconque des revendications précédentes, dans laquelle Z est sélectionné parmi des combinaisons de

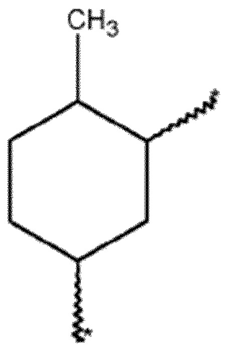

et

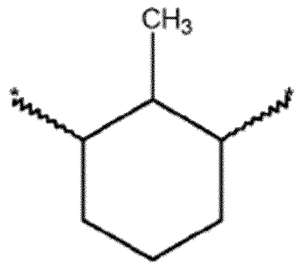

9. Composition selon l'une quelconque des revendications précédentes, comprenant en outre au moins un composant de construction sélectionné parmi des sels de métaux alcalins d'acides aminopolycarboxyliques et parmi des sels de métaux alcalins de (co)polymères d'acide acrylique.

10. Utilisation d'une composition selon l'une quelconque des revendications précédentes pour l'entretien du linge ou le nettoyage de surfaces dures.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020069915 A
- WO 2019233795 A
- WO 2016062578 A
- EP 258068 A
- EP 305216 A
- WO 9205249 A
- WO 2009109500 A
- WO 9613580 A
- EP 218272 A
- WO 9425578 A
- WO 9530744 A
- WO 9535381 A
- WO 9600292 A
- EP 331376 A
- GB 1372034 A
- WO 9506720 A
- WO 9627002 A
- WO 9612012 A
- WO 9514783 A
- WO 2011150157 A
- WO 2012137147 A
- WO 2010065455 A
- WO 2011084412 A
- WO 2011084417 A
- WO 0060063 A
- WO 20110845998 A
- JP 64074992 B
- WO 9116422 A
- WO 9401541 A
- WO 9522615 A
- WO 9704079 A
- WO 9707202 A
- WO 2007087508 A
- EP 407225 A
- EP 260105 A
- US 5869438 A
- EP 283075 A2
- WO 8906279 A
- WO 9102792 A
- WO 9523221 A
- DE 10064983
- WO 2003054184 A
- WO 2003056017 A
- WO 2003055974 A
- WO 2005063974 A
- WO 2005103244 A
- DE 102005028295
- WO 9219729 A
- WO 9634946 A
- WO 9820115 A
- WO 9820116 A
- WO 9911768 A
- WO 0144452 A
- WO 02088340 A
- WO 03006602 A
- WO 200403186 A
- WO 2004041979 A
- WO 2007006305 A
- WO 2011036263 A
- WO 2011036264 A
- WO 2011072099 A
- EP 1921147 A
- EP 0851023 A
- DE 19819187 A


### Non-patent literature cited in the description


- **NEEDLEMAN ; WUNSCH.** *J. Mol. Biol.,* 1979, vol. 48, 443-453
- **DARTOIS et al.** *Biochemica et Biophysica Acta,* 1992, vol. 1131, 253-360
- **GUPTA et al.** *Biotechnol. Appl. Biochem.,* 2003, vol. 37, 63-71
- **GUPTA et al.** *Appl. Microbiol. Biotechnol.,* 2002, vol. 60, 381-395
- **DELMAR et al.** *Analytical Biochem,* 1979, vol. 99, 316-320
- **VASANTHA et al.** *J. Bacteriol.,* 1984, vol. 159, 811-819
- **JA WELLS et al.** *Nucleic Acids Research,* 1983, vol. 11, 7911-7925
- **EL SMITH et al.** *J. Biol Chem,* 1968, vol. 243, 2184-2191
- **JACOBS et al.** *Nucl. Acids Res,* 1985, vol. 13, 8913-8926